# EUROPÄISCHE PATENTSCHRIFT

(11) **EP 2 002 765 B1**
(45) Veröffentlichungstag und Bekanntmachung des Hinweises auf die Patenterteilung: **12.08.2009**
(21) Anmeldenummer: 07011518.3
(22) Anmeldetag: 12.06.2007
(51) Int. Cl.: A47J 27/08

(54) **Dampfdruckkochgefäß**
Pressure cooker
Cocotte-minute

(43) Veröffentlichungstag der Anmeldung: 17.12.2008
(73) Patentinhaber: Silit-Werke GmbH & Co. KG, 88499 Riedlingen (DE)
(72) Erfinder: Baur, Konrad, 88499 Riedlingen-Neufra (DE); Czypulovski, Detlef, 89179 Beimerstetten (DE); Edholzer, Peter, 88499 Altheim (DE); Fingerle, Hans, 88499 Riedlingen (DE); Grözinger, Roland, 88471 Laupheim (DE); Lison, Klara, 88524 Uttenweiler (DE); Weigand, Oliver, 88521 Ertingen (DE); Wontke, Karl-Heinz, 88422 Bad Buchau (DE)
(74) Vertreter: Grünecker, Kinkeldey, Stockmair & Schwanhäusser Anwaltssozietät

(56) Entgegenhaltungen:
- EP-A1- 0 023 724
- DE-A1- 3 015 670
- FR-A- 2 481 100
- FR-A1- 2 535 598

## Beschreibung

Die Erfindung bezieht sich auf ein Dampfdruckkochgefäß der im Oberbegriff von Anspruch 1 erläuterten Art.

Ein derartiges Dampfdruckkochgefäß ist aus der DE-A-3015670 bekannt. Das bekannte Dampfdruckkochgefäß enthält eine druckgesteuerte Kurzzeitmesser-Auslösevorrichtung, die rein mechanisch arbeitet, d.h. es ist eine Schaltfeder und ein Sprungkipphebel vorgesehen, der auf die Unruhe des Kurzzeitweckers einwirkt. Der Sprungkipphebel wird über eine Klinke bewegt, die vor Beginn des Druckanstieges an einem Druckanzeigestift anliegt. Bewegt sich dieser im Verlaufe des Druckanstieges, so wird die Klinke aus dem Weg gedrückt und bewegt den Sprungkipphebel derart, dass der Kurzzeitwecker betätigt wird. Mit dieser Ausgestaltung kann zwar der Zeitablauf für den Garprozess in Gang gesetzt werden, eine Beeinflussung der Länge des Garprozesses entsprechend der Temperatur im Druckgefäß bzw. des damit zusammenhängenden Drucks kann jedoch nicht stattfinden.

Dampfdruckkochgefäße sind als Druckgefäße ausgebildet und so verschlossen, dass der Druck im Inneren des Gefäßkörpers erst auf einen ungefährlichen Wert abgebaut werden muss, bevor das Gefäß geöffnet werden kann. Dadurch ergibt sich jedoch das Problem, dass der Benutzer den Garzustand der Lebensmittel im Kochgefäß während des Kochprozesses nicht kontrollieren kann. Ein Dampfdruckkochgefäß muss deshalb nach Richtwerten im Hinblick auf die Temperatur, den Druck und die erforderliche Garzeit betrieben werden. Zu diesem Zweck enthalten Dampfdruckkochgefäße einen Druckanzeigestößel, meist als Teil eines Kochventils ausgebildet, der mit geeigneten, visuell sichtbaren Markierungen, meist zwei im Abstand übereinander liegende Ringe, versehen ist, die während des Druckaufbaus sichtbar werden und dem Benutzer z. B. den Beginn des Garprozesses bzw. die jeweils erreichte Druckstufe signalisieren. Der Benutzer muss dies bemerken, um den Beginn des Richtwertes für die erforderliche Garzeit nicht zu verpassen, da dann der Richtwert für die Garzeit nicht mehr exakt einzuhalten ist und geschätzt werden muss. Ein weiteres Problem liegt in der Tatsache begründet, dass die Energiezufuhr bei Herden nach wie vor überwiegend manuell geregelt wird. Da jeder Herd und jede Beheizungsart anders reagiert, muss der Benutzer erst Erfahrung sammeln, ehe ihm ein optimales Ergebnis gelingt. Wird die Energiezufuhr versehentlich zu stark gedrosselt, wird das Lebensmittel auch bei Einhaltung des Garzeit-Richtwertes möglicherweise nicht durchgegart, wird die Energiezufuhr zu lange auf hohem Niveau gehalten, wird das Lebensmittel übergart.

Um dieses Problem zu lösen, wird bei einem Dampfdruckkochgefäß gemäß der EP-A-23724 vorgeschlagen, einen Temperaturfühler einzusetzen, der die im Inneren des Gefäßkörpers herrschende Temperatur feststellt und ein Zeitglied derart betätigt, dass die Garzeit beim Erreichen einer Schwelltemperatur während des Ankochens selbsttätig zu laufen beginnt, und dass die Garzeit selbsttätig verlängert wird, wenn die Temperatur, auch nur über bestimmte Zeitabschnitte, unter die Normtemperatur gefallen ist. Anstelle des Temperatursensors kann jedoch auch ein Drucksensor, wie beispielsweise eine Druckmessdose oder ein Bimetallstreifen verwendet werden.

Der Erfindung liegt die Aufgabe zu Grunde, eine konstruktiv einfache Möglichkeit bereitzustellen, die Garzeit unter Berücksichtigung von Druckschwankungen im Inneren des Gefäßkörpers zu überwachen.

Die Aufgabe wird durch die im Anspruch 1 angegebenen Merkmale gelöst.

Durch die erfindungsgemäße Ausgestaltung wird auf konstruktiv einfache Weise die Bewegung des Druckanzeigestößels des Dampfdruckkochgefäßes, der sowieso vorhanden ist, ausgenutzt, um insbesondere den Beginn der Garzeit genau festzustellen und den Zeitablauf der Garzeit zu starten, während des Kochens zu überwachen und ggf. zu korrigieren. Es sind somit keine zusätzlichen Sensoren notwendig, die einerseits die Herstellungskosten erhöhen und andererseits Fehlerquellen darstellen könnten oder die Reinigung erschweren. Auch können Besonderheiten des jeweiligen Herdes oder der Beheizungsart, insbesondere die Ansprechzeiten auf Änderungen der Energiezufuhr, ausgeglichen werden, ohne dass der Benutzer erst Erfahrungen mit den vom Kochgefäßhersteller vorgegebenen Richtwerten von Garzeiten machen muss.

Die Übertragung erfolgt berührungslos, so dass auch hier die Herstellungskosten kaum erhöht werden, da Leitungsverbindungen nicht notwendig sind.

Bevorzugt wird für eine berührungslose Übertragung ein Hall-Sensor in Verbindung mit einem Magneten, insbesondere einem Dauermagneten, verwendet.

Eine erfindungsgemäß vorgesehene Einstelleinrichtung für eine gewünschte Garzeit ist jedem Benutzer von den üblichen Kurzzeitweckem oder dergleichen bekannt, so dass die Bedienung für jeden Benutzer einfach ist.

Bevorzugt werden übliche Zeitschaltuhren verwendet, wie sie auch in Kurzzeitweckem eingesetzt werden, deren Zeitablauf rückwärts erfolgt und die auf einfache Weise, beispielsweise durch Anhalten bei Unterschreitung eines Normdrucks, durch die Bewegung des Druckanzeigestößels beeinflussbar sind.

Bevorzugt sind übliche visuelle und/oder akustische Anzeigen vorgesehen, die den Benutzer mit den erforderlichen Informationen versorgen, beispielsweise das Ende der Garzeit oder einen (länger dauernden) Druckabfall im Inneren des Kochgefäßes anzeigen.

Bevorzugt ist der Zeitgeber lösbar befestigt, damit er zum Reinigen des Dampfdruckkochgefäßes abgenommen werden kann.

Die Befestigung erfolgt bevorzugt über einen Rastsitz, da dieser sowohl die notwendige Haltekraft aufbringen als auch eine exakte Positionierung des Zeitgebers sicherstellen kann.

Besonders bevorzugt ist die Verwendung eines Rastsitzes mit einer Schiebeführung und wenigstens einem Rastelement, wobei die Schiebeführung für eine exakte Ausrichtung und das Rastelement zum Halten und Positionieren des Zeitgebers sorgt.

Um die Anzahl von Schwächungsstellen, die Befestigungsstellen an einem Druckgefäß immer darstellen, zu minimieren, ist der Zeitgeber bevorzugt an einem dem Deckel zugeordneten Griffteil angeordnet, der gleichzeitig zur Lagerung des Druckanzeigestößels dient.

Bei einer lösbaren Befestigung kann der Benutzer sowohl ein mit einem Magneten am Druckanzeigstößel versehenen Dampfdruckkochtopf und andererseits einen Zeitgeber mit Hall-Sensor und Befestigungseinrichtung nachkaufen, um entweder alle im Haushalt befindlichen Dampfdruckkochgefäße mit einem einzigen Zeitgeber zu betreiben oder einen Ersatz für einen verloren gegangenen Zeitgeber zu erhalten.

Ein Ausführungsbeispiel der Erfindung wird nachfolgend anhand der Zeichnungen näher erläutert. Es zeigen:
- Fig. 1: eine perspektivische Darstellung eines erfindungsgemäßen Dampfdruckkochgefäßes,
- Fig. 2: den Schnitt II-II aus Fig. 1 mit einem Druckanzeigestößel in Ruhestellung,
- Fig. 3: eine Darstellung ähnlich Fig. 2 mit dem Druckanzeigestößel in Kochstellung,
- Fig. 4A, 4B und 4C: verschiedene Ansichten eines Zeitgebers mit Befestigungseinrichtung, und
- Fig. 5A, 5B und 5C: Druck-Zeit-Kurven verschiedener Kochvorgänge im Vergleich, in die der Weg des Druckanzeigestößels eingetragen ist.

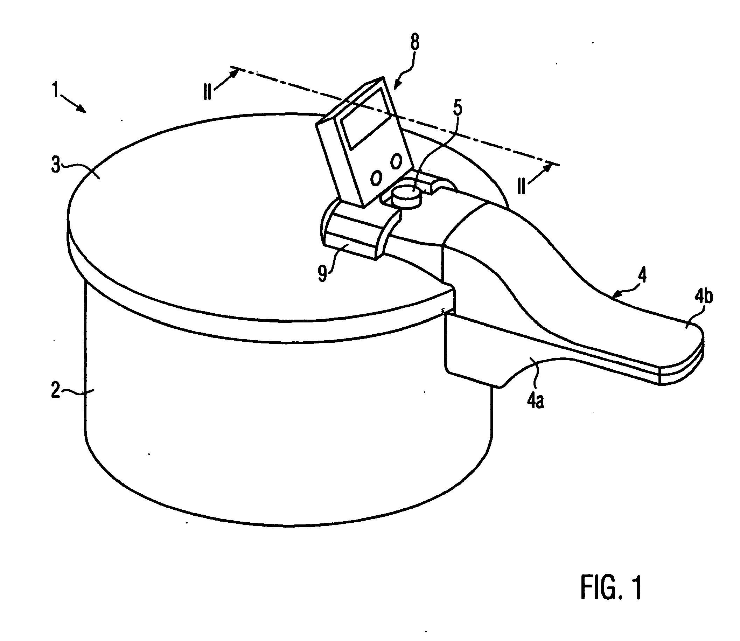

Fig. 1 zeigt in perspektivischer und stark schematisierter Darstellung ein erfindungsgemäß ausgerüstetes Dampfdruckkochgefäß 1, das in üblicher Weise mit einem Gefäßkörper 2 und einem Deckel 3 versehen ist, die druckdicht aneinander befestigt werden können. Das Dampfdruckkochgefäß 1 enthält den bei derartigen Druckgefäßen üblichen, zweigeteilten Griff 4, der einseitig vom Gefäß vorsteht. Der Griff 4 enthält ein erstes, am Gefäßkörper 2 befestigtes Griffteil 4a und ein zweites, am Deckel 3 befestigtes Griffteil 4b, wobei deren fluchtende Ausrichtung zueinander den korrekten Verschluss des Dampfdruckgefäßes 1 anzeigt.

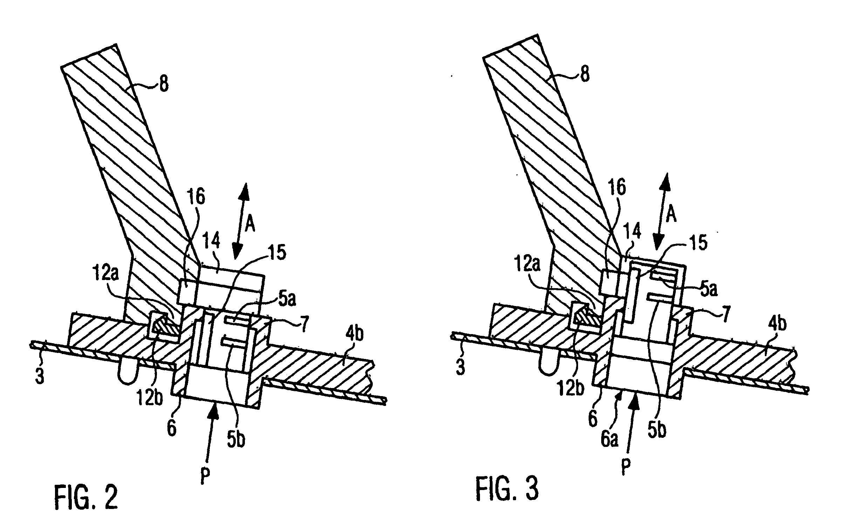

Das Deckel-Griffteil 4b erstreckt sich über die nach oben weisende Oberfläche des Deckels 2 und lagert dort, wie auch in den Figuren 2 und 3 ersichtlich, einen Druckanzeigestößel 5. Der Druckanzeigestößel 5 ist in einer Gleitführung 6 gleitend verschiebbar und wird vom Druck P aus dem Inneren des Dampfdruckkochgefäßes beaufschlagt. Zu diesem Zweck steht der Druckanzeigestößel 5 in der Gleitführung 6 mit dem Inneren des Dampfdruckkochgefäßes über eine Öffnung 6a in Verbindung. Der Druckanzeigestößel 5 ist so in der Gleitführung 6 aufgenommen, dass er sich unter Einwirkung eines sich im Druckgefäßkörper 2 aufbauenden oder abbauenden Druckes in Richtung des Doppelpfeils A im Wesentlichen senkrecht zum Deckel 3 bewegt und im Verlaufe des Druckaufbaus immer stärker über eine obere Begrenzung 7 der Aufnahmeführung 6 ansteigt und somit für den Benutzer sichtbar wird. Der Druckanzeigestößel 5 ist weiterhin mit wenigsten einer visuell sichtbaren Markierung 5a, 5b versehen, die dem Benutzer den Beginn des Kochvorgangs und somit den Zeitpunkt anzeigen, an der der Richtwert für die Garzeit gestartet und die Energiezufuhr ggf. gedrosselt werden sollte. In den Fig. 2 und 3 sind zwei Markierungen 5a, 5b in Form der üblichen Ringe oder Streifen dargestellt, deren Sichtbarwerden über der oberen Begrenzung 7 den Beginn des Kochvorgangs bzw. eine erste und eine zweite Druckstufe (z. B. 0,3 und 0,8 bar) anzeigt, damit der Benutzer in üblicher Weise die Wärmequelle regeln kann.

Der Druckanzeigestößel 5 kann weiterhin Teil eines üblichen Kochventils sein und außer der Druckanzeige noch andere Funktionen erfüllen, beispielsweise ein Ankochventil öffnen und schließen, ein Abdampfventil öffnen und schließen oder dergleichen.

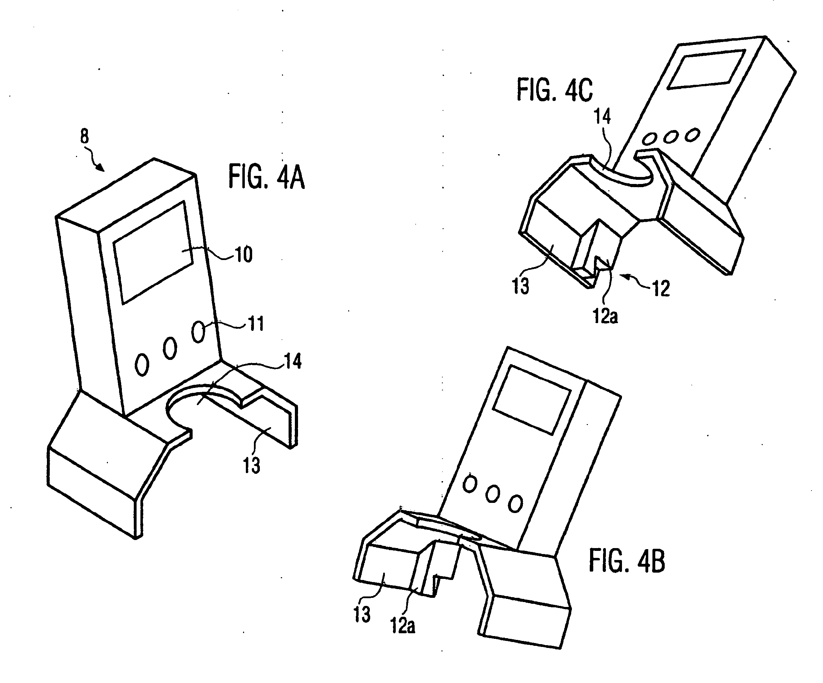

Das Dampfdruckkochgefäß 1 enthält weiterhin einen Zeitgeber 8, z. B. in der Art einer Zeitschaltuhr. Der Zeitgeber 8 ist mit Hilfe einer Befestigungseinrichtung 9 in der Nähe des Druckanzeigestößels 5 befestigt. Im dargestellten Ausführungsbeispiel ist der Zeitgeber 8 mit Hilfe der Befestigungseinrichtung 9 am deckelseitigen Griffteil 4b befestigt. Wie auch in Verbindung mit den Figuren 4A bis 4C ersichtlich, enthält der Zeitgeber 8 ein bevorzugt elektronisches Zeitglied mit einer visuellen Anzeige, beispielsweise in Form eines Display 10 und manuell zu betätigenden Betätigungselementen 11, mit denen beispielsweise eine vorbestimmte Garzeit und/oder ein Kochprogramm, definiert beispielsweise durch die Art des Lebensmittels wie "Kartoffeln" oder "Hülsenfrüchte" oder dergleichen, eingestellt werden können. Der Zeitgeber 8 kann weiterhin mit einer akustischen Anzeige, beispielsweise mit einem oder mehreren Signaltönen, und mit einer Alarmeinrichtung visuell und/oder akustisch, versehen sein.

Die Befestigungseinrichtung 9 erlaubt eine bevorzugt lösbare Verbindung mit dem Griffteil 4b und enthält im dargestellten Ausführungsbeispiel einen Rastsitz 12 mit einer Hinterschneidung 12a und einem Gegenhaken 12b, von denen wenigstens ein Element 12a, 12b, im vorliegenden Fall der Gegenhaken 12b, elastisch ausweichen kann, und die einrastend zusammen wirken. Im dargestellten Ausführungsbeispiel ist die Hinterschneidung 12a am Zeitgeber 8 und der Gegenhaken 12b am Griffteil 4b angeordnet, wobei bevorzugt jeweils ein Paar jedes Elementes 12a, 12b vorgesehen und beidseitig vom und nahe am Druckanzeigestößel 5 angeordnet sind.

Die Befestigungseinrichtung 9 enthält weiterhin eine Schiebeführung 13 in Form zweier der Form des Griffteils 4b angepasster, seitlicher Führungswangen, mit denen die Befestigungseinrichtung 9 auf das Griffteil 4b aufgeschoben werden kann, bis der Hinterschnitt 12a einrastet.

Die Befestigungseinrichtung 9 ist im dargestellten Ausführungsbeispiel brückenartig oder klammerartig ausgebildet und übergreift das obere Griffteil 4b an den nicht vom Deckel 3 bedeckten Seiten. Die brückenartige Befestigungseinrichtung 9 enthält weiterhin eine Ausschnittsöffnung 14, durch die der Druckanzeigestößel 5 hindurch treten kann und sichtbar bleibt. Die Befestigungseinrichtung 9 kann jedoch auch in eine Ausnehmung am Griffteil 4b einschiebbar sein.

Zwischen dem Druckanzeigestößel 5 und dem Zeitgeber 8 ist eine bevorzugt berührungslose Signalübertragungsvorrichtung vorgesehen, die dem Zeitgeber 8 die Stellung des Stößels 5 signalisiert. Dies erfolgt bevorzugt über einen Magneten 15, bevorzugt einen Dauermagneten und einen Hall-Sensor 16. Der Magnet 15 ist am Druckanzeigestößel 5 und der Hall-Sensor 16 am Zeitgeber 8 angeordnet. Die Anordnung ist so gewählt, dass der Hall-Sensor 16 spätestens dann anspricht, wenn der Kochvorgang beginnt, beispielsweise wenn die Entlüftung schließt oder der Druck ein vorbestimmtes Niveau erreicht hat. Dann sollten Hall-Sensor 16 und Magnet 15 solange in Übertragungskontakt bleiben, solange ein Kochvorgang stattfindet, d. h. solange der Druck auf Gamiveau ist. Bevorzugt ist der Magnet 15 an einer Stelle des Druckanzeigestößels 5 angeordnet, die so lange gegenüber dem Hall-Sensor 16 abgeschirmt ist, bis ein vorbestimmter Druckzustand erreicht ist, und über den anschließend noch möglichen Weg des Druckanzeigestößels 5 in Übertragungskontakt bleibt. Bevorzugt befindet sich diese Stelle im nicht angehobenen Zustand noch innerhalb der Abdeckung 7 in der Gleitführung 6.

Der Hall-Sensor 16 ist so ausgebildet, dass er den Zeitablauf der vorgegebenen Garzeit, die entweder als direkter Zeitwert (in min sowie ggf. h und/oder sek.) oder als Garprogramm (z. B. "Kartoffeln" oder "Hülsefrüchte" usw.) durch den Benutzer über die Bedienelemente 11 eingegeben wurde, fortlaufend, z. B. in Abhängigkeit von der Bewegung des Druckanzeigestößels 5, z. B. der zurückgelegten Wegstrecke des Magneten 15, der Richtung der Bewegung des Magneten 15, oder der Position des Magneten 15, hemmt oder freigibt.

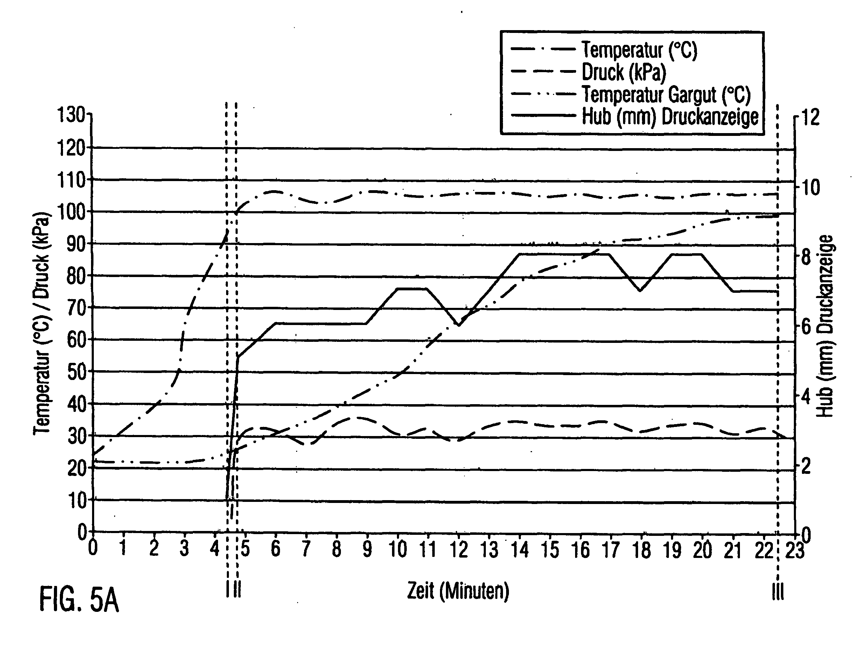

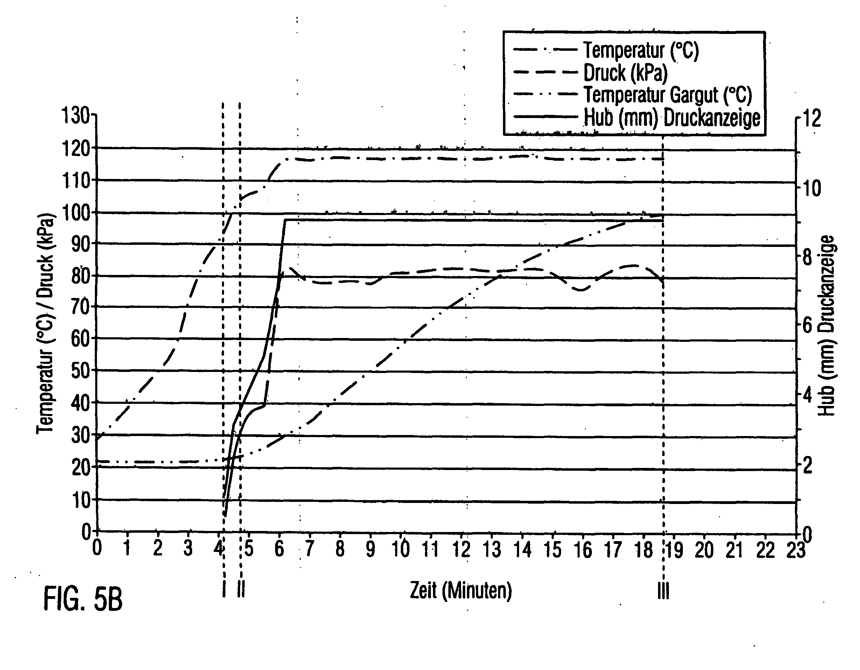

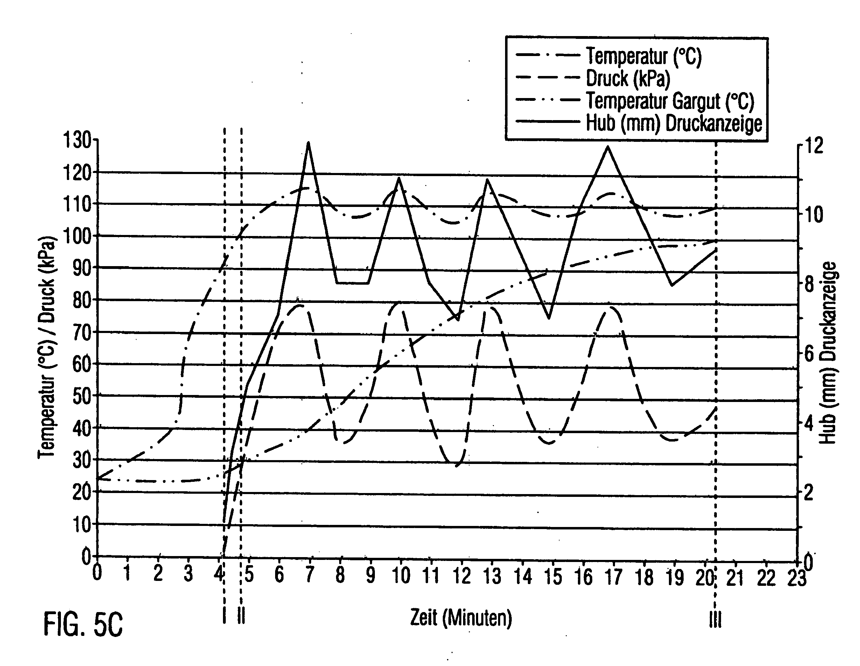

Die Figuren 5A, 5B und 5C zeigen die Temperatur/Druck-Zeit-Verläufe verschiedener Kochversuche im Vergleich. Die Kochversuche für alle Kurven wurden in einem Dampfdruckkochgefäß der Firma Silit, "Sicomatic-L Silargan" mit 4,5 Liter Inhalt durchgeführt. Es wurden jeweils 500 g Kartoffeln mit 250 ml Wasser auf einem Silit-Induktionsherd SIT-3000 mit 1500 Watt gekocht.

Der Druckanzeigestößel des verwendeten Dampfdruckkochgefäßes wies eine erste Markierung 5a für eine erste Druckstufe (0,3 bar) und eine zweite Markierung 5b für eine zweite, höhere Druckstufe (0,8bar) auf. Der Start bei allen Versuchen war bei einem Überdruck von 30kPa, der bei allen Versuchen nach 4,8 min erreicht war. Am Ende der Garzeit lag die Kochguttemperatur bei 100°C.

Fig. 5A erzeigt den Temperatur/Druck-Zeit-Verlauf in einem ersten Kochversuch, der auf Druckstufe 1 durchgeführt wurde und bei dem darauf geachtet wurde, dass die Druckstufe 1 eingehalten wird.

Bei Beginn der Kochversuche nach allen drei Figuren 5A, 5B und 5C wurde am Zeitgeber 8 das Programm "Kartoffeln" vorgewählt oder ein in der Bedienungsanleitung des Druckgefäßes angegebener Richtwert der Garzeit eingegeben.

Das erste Übertragungssignal der Übertragungseinrichtung wurde an der Stelle "I" festgelegt, an der der Entlüftungsvorgang beendet ist (die automatische Entlüftung schließt) und der Druckaufbau beginnt. Der Druckaufbau setzt sich fort, bis der für den Beginn der Garzeit festgelegte Druck, z. B. etwa 30 kPa, erreicht ist, was im vorliegenden Fall an der Stelle II der Fall war. Jetzt beginnt am Zeitgeber 8 die Garzeit zu laufen. Die Energiezufuhr wurde zunächst entsprechend verringert und dann ggf. nachgeregelt, um den Druck im Dampfdruckkochgefäß auf der ersten Druckstufe zu halten. Der Kochvorgang wird fortgeführt bis der Zeitgeber festgestellt hat, dass die Garzeit, relativiert auf die Druckverhältnisse, im Wesentlichen konstant auf der ersten Stufe, abgelaufen ist. Dies war an der Stelle III der Fall, 17,7 min nach der Stelle II, d. h. nach Beginn des Garprozesses. Der Ablauf der Garzeit wird dem Benutzer durch optische und/oder akustische Signale mitgeteilt. Eine Garprobe ergab, dass die Kartoffeln nach dieser Garzeit vollständig durchgegart jedoch nicht übergart waren.

Fig. 5B zeigt den gleichen Kochversuch wie Fig. 5A, lediglich mit dem Unterschied, dass hier auf der Druckstufe 2 (untere Markierung 5b erscheint über der Abdeckung 7) gegart wurde. Auch hier wurde wiederum darauf geachtet, dass der Druck möglichst konstant auf dieser Druckstufe (0,8bar) verblieb. Der erste Übertragungskontakt erfolgt ebenfalls an der Stelle I nach dem Entlüften. Die Stelle II zeigt das Erreichen des Drucks von 30kPa, d. h. den Beginn der Garzeit an, die vom Benutzer vorab in Form eines Programms "Kartoffeln" oder in Form eines Richtwertes einer Garzeit aus der Bedienungsanleitung des Dampfdruckkochgefäßes eingegeben wurde. Beim Erscheinen der zweiten Markierung 5b bzw. kurz zuvor, wird die Energiezufuhr gedrosselt, so dass der Druck im Wesentlichen konstant auf der zweiten Druckstufe gehalten werden kann. Aufgrund des höheren Drucks und somit der höheren Temperatur im Dampfdruckkochgefäß stellt der Zeitgeber 8 fest, dass der Garprozess früher beendet werden kann als im Kochversuch der Fig. 5A und sendet an der Stelle III, bereits 13,9 min nach der Stelle II, ein akustisches und/oder visuelles Signal aus, das das Ende der Garzeit ankündigt. Ein Test ergab, dass die Kartoffeln durchgegart, jedoch nicht übergart waren.

Fig. 5C zeigt einen dritten Kochversuch, der analog der Kochversuche nach den Figuren 5A und 5B durchgeführt wurde, wobei jedoch zwischen den Stellen "II" und "III" der Druck zwischen den und um die beiden Druckstufen schwankte. Auch hier fand der erste Übertragungskontakt an der Stelle I nach der Entlüftung statt. Die Stelle II markiert das Erreichen eines Drucks von 30 kPa, d. h. den Beginn der Garzeit am Zeitgeber. Deutlich ist der mehrfach ansteigende und abfallende Druckverlauf bzw. Wegverlauf des Druckanzeigestößels 5 ersichtlich. Der Zeitgeber 8 verarbeitet demzufolge die vorgegebene Garzeit für die Druckstufe 1 und für die Druckstufe 2 anteilig, so dass nach einer Garzeit von 15,7 min, d. h. einer längeren Garzeit als bei Druckstufe 2 und einer kürzeren Garzeit als bei Druckstufe 1 das Signal zum Ablauf der Garzeit gegeben wird. Ein Test ergab, dass die Kartoffeln durchgegart jedoch nicht übergart waren.

Zum Vergleich wurde in den Fig. 5A, 5B, 5C auch der Verlauf der Temperatur T angezeigt. Die Kurven zeigen, dass die Temperatur dem Druck der Tendenz nach folgt, wobei jedoch die Temperatur bei dem beschriebenen kurzzeitigen An- und Abschalten des Herds, nicht so stark abfällt, wie der Druck. Alles in allem, ist jedoch die Überwachung des Druckes zur Korrektur der Garzeit eine gute Annäherung und konstruktiv wesentlich einfacher zu lösen, insbesondere durch die erfindungsgemäße Ausgestaltung, als eine Korrektur der Garzeit über eine Temperaturmessung.

In Abwandlung des beschriebenen und gezeigten Ausführungsbeispiels, kann die Druckanzeige auch drahtlos per Funk an entfernte Empfangsgeräte übertragen werden. Statt eines akustischen Alarms kann zusätzlich oder alternativ ein visueller Alarm eingesetzt werden. Als Zeitgeber kann jedes geeignete Zeitglied/Zeitschaltwerk eingesetzt werden. Der Zeitgeber kann auch fest mit dem Dampfdruckkochgefäß verbunden sein.

## Patentansprüche

1. Dampfdruckkochgefäß (1), mit einem Gefäßkörper (2), einem Deckel (3), einem Druckanzeigestößel (5) mit wenigstens einer Druckanzeigemarkierung (5a, 5b), der durch Druckänderungen im Inneren des Gefäßkörpers (2) bewegbar ist, und einem Zeitgeber (8) zum Überwachen der Garzeit, der durch die Bewegung des Druckanzeigestößels (5) beeinflussbar ist, **dadurch gekennzeichnet, dass** die Bewegung des Druckanzeigestößels (5) berührungslos auf den Zeitgeber (8) übertragen wird.

2. Dampfdruckkochgefäß (1) nach Anspruch 1, **dadurch gekennzeichnet, dass** die Bewegungsübertragung zwischen dem Druckanzeigestößel (5) und dem Zeitgeber durch einen Magnet (15) und einen Hall-Sensor (16) erfolgt.

3. Dampfdruckkochgefäß (1) nach Anspruch 1 oder 2 , **dadurch gekennzeichnet, dass** der Zeitgeber (8) eine manuelle Einstelleinrichtung (11) für eine gewünschte Garzeit aufweist.

4. Dampfdruckkochgefäß (1) nach einem der Ansprüche 1 bis 3, **dadurch gekennzeichnet, dass** der Zeitgeber (8) als manuell einstellbare Zeitschaltuhr ausgebildet ist, deren Ablauf durch die Bewegung des Druckanzeigestößels (5) beeinflussbar ist.

5. Dampfdruckkochgefäß (1) nach einem der Ansprüche 1 bis 4, **dadurch gekennzeichnet, dass** der Zeitgeber (8) eine visuelle und/oder eine akustische Anzeige (10) aufweist.

6. Dampfdruckkochgefäß (1) nach einem der Ansprüche 1 bis 5, **dadurch gekennzeichnet, dass** der Zeitgeber (8) mit einer Befestigungseinrichtung (9) im Bereich des Druckanzeigestößels (5) lösbar befestigt ist.

7. Dampfdruckkochgefäß (1) nach einem der Ansprüche 1 bis 6, **dadurch gekennzeichnet, dass** der Zeitgeber (8) über einen Rastsitz lösbar befestigt ist.

8. Dampfdruckkochgefäß (1) nach Anspruch 7, **dadurch gekennzeichnet, dass** der Rastsitz eine Schiebeführung (13) und wenigstens ein Rastelement (12) aufweist.

9. Dampfdruckkochgefäß (1) nach einem der Ansprüche 1 bis 8, **dadurch gekennzeichnet, dass** der Druckanzeigestößel (5) und der Zeitgeber (8) an einem dem Deckel (3) zugeordneten Griffteil (4b) angeordnet sind.

10. Zeitgeber für ein Dampfdruckkochgefäß (1) nach einem der Ansprüche 2 bis 9, **gekennzeichnet durch** einen Hall-Sensor (16) und eine Befestigungseinrichtung (9) zum lösbaren Befestigen des Zeitgebers (8) am Dampfdruckkochgefäß (1).

11. Dampfdruckkochgefäß (1), mit einem Gefäßkörper (2), einem Deckel (3), und einem durch Druckänderungen im Inneren des Gefäßkörpers (2) bewegbaren Druckanzeigestößel (5), für einen Zeitgeber (8) nach Anspruch 10, **dadurch gekennzeichnet, dass** der Druckanzeigestößel (5) einen Magneten (15) enthält, und dass eine Befestigungseinrichtung (9) zum lösbaren Befestigen des Zeitgebers (8) zum Überwachen der Garzeit vorgesehen ist.

## Claims

1. A pressure cooker (1) comprising a vessel body (2), a lid (3), a pressure-indicating push rod (5), which is provided with at least one pressure-indicating marking (5a, 5b) and which is movable in response to pressure variations in the interior of the vessel body (2), and a timer (8) for monitoring the cooking time, the timer (8) being adapted to be influenced by the movement of the pressure-indicating push rod (5), **characterized in that** the movement of the pressure-indicating push rod (5) is transmitted to the timer (8) in a contactless manner.

2. A pressure cooker (1) according to claim 1, **characterized in that** the transmission of the movement between the pressure-indicating push rod (5) and the timer is effected by means of a magnet (15) and a Hall sensor (16).

3. A pressure cooker (1) according to claims 1 or 2, **characterized in that** the timer (8) is provided with a manual adjustment unit (11) for a desired cooking time.

4. A pressure cooker (1) according to one of the claims 1 to 3, **characterized in that** the timer (8) is implemented as a manually adjustable time switch whose operation can be influenced by the movement of the pressure-indicating push rod (5).

5. A pressure cooker (1) according to one of the claims 1 to 4, **characterized in that** the timer (8) is provided with a visual and/or an acoustic indicator (10).

6. A pressure cooker (1) according to one of the claims 1 to 5, **characterized in that** the timer (8) is releasably secured in position with the aid of a fastening means (9) in the area of the pressure-indicating push rod (5).

7. A pressure cooker (1) according to one of the claims 1 to 6, **characterized in that** the timer (8) is adapted to be releasably secured in position via a snap seat.

8. A pressure cooker (1) according to claim 7, **characterized in that** the snap seat comprises a sliding guide (13) and at least one locking element (12).

9. A pressure cooker (1) according to one of the claims 1 to 8, **characterized in that** the pressure-indicating push rod (5) and the timer (8) are arranged on a handle component (4b) which is associated with the lid (3).

10. A timer for a pressure cooker (1) according to one of the claims 2 to 9, **characterized by** a Hall sensor (18) and a fastening means (9) for releasably fixing the timer (8) to the pressure cooker (1).

11. A pressure cooker (1) comprising a vessel body (2), a lid (3), and a pressure-indicating push rod (5) which is movable in response to pressure variations in the interior of the vessel body (2), for a timer (8) according to claim 10, **characterized in that** the pressure-indicating push rod (5) includes a magnet (15), and that a fastening means (9) is provided for releasably fixing a timer (8) used for monitoring the cooking time.

## Revendications

1. Cocotte-minute (1), avec un corps de récipient (2), un couvercle (3), un plongeur d'affichage de pression (5) avec au moins un marquage d'affichage de pression (5a, 5b), qui peut être déplacé par suite de variations de pression à l'intérieur du corps de récipient (2), et une horloge (8) pour surveiller le temps de cuisson, qui peut être influencée par le mouvement du plongeur d'affichage de pression (5), **caractérisée en ce que** le mouvement du plongeur d'affichage de pression (5) est transmis sans contact à l'horloge (8).

2. Cocotte-minute (1) selon la revendication 1, **caractérisée en ce que** la transmission du mouvement entre le plongeur d'affichage de pression (5) et l'horloge (8) est effectuée au moyen d'un aimant (15) et d'une sonde de Hall (16).

3. Cocotte-minute (1) selon la revendication 1 ou 2, **caractérisée en ce que** l'horloge (8) présente un dispositif de réglage manuel (11) pour un temps de cuisson souhaité.

4. Cocotte-minute (1) selon l'une quelconque des revendications 1 à 3, **caractérisée en ce que** l'horloge (8) est réalisée sous la forme d'une minuterie réglable manuellement, dont le déroulement peut être influencé par le mouvement du plongeur d'affichage de pression (5).

5. Cocotte-minute (1) selon l'une quelconque des revendications 1 à 4, **caractérisée en ce que** l'horloge (8) comporte un affichage visuel et/ou acoustique (10).

6. Cocotte-minute (1) selon l'une quelconque des revendications 1 à 5, **caractérisée en ce que** l'horloge (8) est fixée de façon amovible dans la région du plongeur d'affichage de pression (5) au moyen d'un dispositif de fixation (9).

7. Cocotte-minute (1) selon l'une quelconque des revendications 1 à 6, **caractérisée en ce que** l'horloge (8) est fixée de façon amovible au moyen d'un siège à déclic.

8. Cocotte-minute (1) selon la revendication 7, **caractérisée en ce que** le siège à déclic comprend un guidage coulissant (13) et au moins un élément à déclic (12).

9. Cocotte-minute (1) selon l'une quelconque des revendications 1 à 8, **caractérisée en ce que** le plongeur d'affichage de pression (5) et l'horloge (8) sont disposés sur une partie de poignée (4b) associée au couvercle (3).

10. Horloge pour une cocotte-minute (1) selon l'une quelconque des revendications 2 à 9, **caractérisée par** une sonde de Hall (16) et un dispositif de fixation (9) pour la fixation amovible de l'horloge (8) sur la cocotte-minute (1).

11. Cocotte-minute (1), avec un corps de récipient (2), un couvercle (3) et un plongeur d'affichage de pression (5) qui peut être déplacé par suite de variations de pression à l'intérieur du corps de récipient (2), pour une horloge (8) selon la revendication 10, **caractérisée en ce que** le plongeur d'affichage de pression (5) contient un aimant (15), et **en ce qu'**il est prévu un dispositif de fixation (9) pour la fixation amovible de l'horloge (8) pour surveiller le temps de cuisson.
